# EUROPÄISCHE PATENTANMELDUNG

(11) **EP 2 952 242 A1**
(43) Veröffentlichungstag der Anmeldung: **09.12.2015**
(21) Anmeldenummer: 15000661.7
(22) Anmeldetag: 06.03.2015
(51) Int. Cl.: B01D 46/24, B01D 46/00, B01D 46/48, B01D 50/00

(54) **FILTERANLAGE ZUR FILTRIERUNG VON, INSBESONDERE KONTAMINIERTEN, LUFTSTÄUBEN UND VERFAHREN ZUR FILTERUNG**

(30) Priorität: 09.04.2014 DE 102014005177
(71) Anmelder: Rottler, Stephan, 74078 Heilbronn (DE)
(72) Erfinder: Rottler, Stephan, 74078 Heilbronn (DE)
(74) Vertreter: Clemens, Gerhard

(57) **Zusammenfassung**

Eine Filteranlage (10) zur Filtrierung von, insbesondere kontaminierten, Luftstäuben, die Feststoffpartikel und/oder mit, insbesondere Wasser, vernebelte Aerosolpartikel enthalten, welche Partikel insbesondere beim Abfräsen von asbesthaltigen Belägen durch Fräsmaschinen anfallen, mit einer Gehäuseeinheit (12) mit zumindest einem Ansauganschluss (34) zum Anschluss einer zu einer Fräsmaschine führenden Absaugleitung, einem Ansaugaggregat (14) zum Ansaugen der Luftstäube in das Innere der Gehäuseeinheit (12), und einer innerhalb der Gehäuseeinheit (12) angeordneten ersten Filtereinrichtung (20), über/durch die die Luftstäube zum Abscheiden der Partikel geleitet werden, gekennzeichnet dadurch, dass eine erste und zweite durch eine Filterplatte (20), an der in entsprechenden Ausnehmungen die erste Filtereinrichtung (20) angeordnet ist, getrennte Unterdruckkammern (14, 16) vorhanden sind, das Ansaugaggregat (24) mit der zweiten Unterdruckkammer (16) in Kommunikationsverbindung steht und dadurch die Absaugluft über die erste Unterdruckkammer (14) über die Filtereinrichtung (22) und die zweite Unterdruckkammer (16) ansaugt, ein Kanalsystem (28) vorhanden ist, das an das Absaugaggregat (24) angeschlossen ist und in das die vom Absaugaggregat (24) angesaugte, gefilterte Abluft anschließend gedrückt wird, und eine zweite Filtereinrichtung (22) vorhanden ist, die an das Kanalsystem (28) angeschlossen ist und die zugeführte Abluft nach außen nochmals gefiltert abgibt.

## Beschreibung

### TECHNISCHES GEBIET

Die vorliegende Erfindung betrifft eine Filteranlage zur Filtrierung von, insbesondere kontaminierten, Luftstäuben, die Feststoffpartikel und/ oder mit, insbesondere Wasser, vernebelte Aerosolpartikel enthalten, welche Partikel insbesondere beim Abfräsen von asbesthaltigen Belägen durch Fräsmaschinen anfallen, mit einer Gehäuseeinheit mit einem Ansauganschluss zum Anschluss einer zu einer Fräsmaschine führenden Absaugleitung, einem Ansaugaggregat zum Ansaugen der Luftstäube in das Innere der Gehäuseeinheit, und einer innerhalb der Gehäuseeinheit angeordneten ersten Filtereinrichtung, über/durch die die Luftstäube zum Abscheiden der Partikel geleitet werden.

Die vorliegende Erfindung betrifft weiterhin ein Verfahren zur Filtrierung von, insbesondere kontaminierten, Luftstäuben, die Feststoffpartikel und/oder mit, insbesondere Wasser, vernebelte Aerosolpartikel enthalten, welche Partikel insbesondere bei der Beseitigung von asbesthaltigen Belägen durch Fräsmaschinen anfallen, insbesondere unter Einsatz einer obigen Filteranlage.

### STAND DER TECHNIK

Bei der Sanierung von asbesthaltigen Belägen, die hohe Gesundheitsrisiken bergen, werden Fräsmaschinen eingesetzt, die den Asbestbelag abfräsen. Da das Material Asbest höchst gesundheitsgefährdend ist, sind dabei äußerst strenge Vorschriften einzuhalten, damit bei der Sanierung keine asbesthaltigen Partikel in die Umwelt gelangen und beispielsweise die die Sanierung durchführenden Personen gefährden. So fallen bei dem Einsatz von Fräsmaschinen im Bereich des Fräskopfes mit Asbestfasern kontaminierte Luftstäube an, die zuverlässig entsorgt werden müssen. Damit diese gefährlichen Stäube nicht bereits beim Fräsvorgang in die Atmosphäre treten, ist die dem deutschen Patent Nr. 199 53 548 offenbarte Fräseinrichtung bekannt, bei der im Bereich des Fräskopfes eine Flüssigkeitsglocke ausgebildet wird, um die auftretenden Staubpartikel zu binden und anschließend abzusaugen und einer Filteranlage zuzuführen.

Dabei werden an die Fräsmaschine Filteranlagen angeschlossen, die für eine Reinigung beziehungsweise Filtrierung der kontaminierten Stäube sorgen müssen. Derartige Filteranlagen müssen eine dauerhaft zuverlässige Funktion gewährleisten und den höchsten Ansprüchen bezüglich der gesundheitsrechtlich einzuhaltenden Vorschriften genügen.

Bekannte Filteranlagen sind relativ großvolumig, bedürfen eines großen Montageaufwandes, sind hinsichtlich eines optimalen Reinigungsgrades nicht dauerhaft wirtschaftlich einsetzbar, erfordern einen hohen Überwachungs- und Wartungsaufwand und müssen aufgrund des nicht optimalen Reinigungsgrades die zugeführte Abluft nach außen, das heißt außerhalb des sanierten Raumes, abführen, um eine Gefährdung des Arbeitspersonals auszuschließen.

### DARSTELLUNG DER ERFINDUNG

Ausgehend von dem genannten Stand der Technik liegt der vorliegenden Erfindung das technische Problem beziehungsweise die Aufgabe zugrunde, eine Filteranlage der eingangs genannten Art anzugeben, die wirtschaftlich hergestellt werden kann, wirtschaftlich eingesetzt werden kann, den höchsten gesundheitsrechtlichen Anforderungen genüge tut, eine dauerhaft zuverlässige Funktion gewährleistet, eine einfache Bedienung ermöglicht und eine mögliche Gefährdung des Bedienpersonals durch Kontaktierung mit kontaminierten Material so gut wie ausschließt, mithin ohne gesundheitliche Risiken des Bedienpersonals in einfacher Art und Weise betrieben werden kann. Der vorliegenden Erfindung liegt weiterhin das Problem beziehungsweise die Aufgabe zugrunde, ein Verfahren anzugeben, mit dem die vorstehenden beschriebenen Aufgaben einer Filteranlage gelöst werden können und optimale Filtrierungsergebnisse dauerhaft erzielt werden können.

Die erfindungsgemäße Filteranlage ist demgemäß durch die Merkmale des unabhängigen Anspruchs 1 gegeben. Vorteilhafte Ausgestaltung und Weiterbildungen sind Gegenstand der von dem unabhängigen Anspruch 1 direkt oder indirekt abhängigen Ansprüche 2 bis 16.

Das erfindungsgemäße Verfahren ist demgemäß durch die Merkmale des unabhängigen Anspruchs 17 gegeben. Vorteilhafte Ausgestaltung und Weiterbildungen des erfindungsgemäßen Verfahrens sind durch die von dem unabhängigen Anspruch 17 direkt oder indirekt abhängigen Ansprüche 18 bis 20 gegeben.

Die erfindungsgemäße Filteranlage zeichnet sich demgemäß dadurch aus, dass eine erste und zweite durch eine Filterplatte, an der in entsprechenden Ausnehmungen die erste Filtereinrichtung angeordnet ist, getrennte nach außen luftdichte Unterdruckkammern vorhanden sind, das Ansaugaggregat mit der zweiten Unterdruckkammer in Kommunikationsverbindung steht und dadurch die Absaugluft über die erste Unterdruckkammer über die Filtereinrichtung und die zweite Unterdruckkammer ansaugt, ein Kanalsystem vorhanden ist, das an das Absaugaggregat angeschlossen ist und in das die vom Absaugaggregat angesaugte, durch die erste Filtereinrichtung gefilterte Abluft anschließend gedrückt wird, und eine zweite Filtereinrichtung vorhanden ist, die an das Kanalsystem angeschlossen ist und die zugeführte Abluft nach außen nochmals gefiltert abgibt.

Eine besonders bevorzugte Ausführung, die im praktischen Einsatz eine Effizienz aufweist, zeichnet sich dadurch aus, dass das Ansaugaggregat als Turbine, insbesondere Seitenkanalturbine, ausgebildet ist, die die Absaugluft über die erste und zweite Unterdruckkammer über die erste Filtereinrichtung ansaugt und in das Kanalsystem zur Ausleitung über die zweite Filtereinrichtung drückt, wobei die Turbine bevorzugt im Leistungsbereich zwischen 4000 m³/h bis 8000 m³/h, insbesondere bei 4500 m³/h, auf Ansaugvolumen arbeitet.

Eine dauerhaft zuverlässige Funktion wird gemäß einer besonders bevorzugten Weiterbildung der erfindungsgemäßen Filteranlage dadurch erzielt, dass die erste Filtereinrichtung zumindest eine oder mehrere Filterpatronen aufweist, deren luftdurchlässige Wandung flüssigkeitsresistent ausgebildet ist. Dabei kann die Filterwandung der ersten Filtereinrichtung beziehungsweise die Filterpatronen in besonders vorteilhafter Art und Weise eine Kunststoffbeschichtung, insbesondere aus PTFE, aufweisen, die gewährleistet, dass bei flüssigkeitsbehafteten Aerosolen, die sich in der angesaugten Luft befinden, die Filtrierfunktion zuverlässig aufrechterhalten werden kann und ein dauerhafter Filterbetrieb möglich ist.

Eine besonders bevorzugte Ausgestaltung, die einen dauerhaft zuverlässigen Betrieb gewährleistet und optimale Filtrationsergebnisse erzielt, zeichnet sich dadurch aus, dass ein Druckluftaggregat mit einem Druckluftleitungssystem vorhanden ist, mittels dem die erste Filtereinrichtung beziehungsweise deren Filterpatronen durch Beaufschlagung mit Druckluft entgegen der Durchströmrichtung der Abluft nach jeweils vorgebbaren Zeitintervallen impulsartig abgereinigt wird, wobei gemäß einer besonders vorteilhaften Ausgestaltung das Druckluftaggregat als Lamellenverdichter ausgebildet ist.

Bezüglich optimaler Filtrationsergebnisse im Dauerbetrieb hat es sich als besonders vorteilhaft herausgestellt, das Druckluftaggregat so auszugestalten, dass der Arbeitsdruck des Druckaggregats im Bereich zwischen 5 bis 20 bar, insbesondere bei 10 bar, liegt.

Um dem Geräuschpegel im Arbeitsbetrieb zu senken, was insbesondere dann erforderlich ist, wenn Sanierungsarbeiten in Räumen durchgeführt werden, die angrenzend von im normalen Arbeitsbetrieb belegten Räumen durchgeführt werden müssen, zeichnet sich eine vorteilhafte Ausgestaltung dadurch aus, dass innerhalb des Kanalsystems zwischen dem Ansaugaggregat und der zweiten Filtereinrichtung eine Schalldämpfereinrichtung vorhanden ist.

Eine besonders wirtschaftliche Ausgestaltung, die gleichzeitig optimale Filtrierungsergebnisse ermöglicht, zeichnet sich dadurch aus, dass die zweite Filtereinrichtung zumindest eine flächige Filtermatte aufweist, wobei die Filtermatten beispielsweise als Papierfiltermatten ausgebildet sein können.

Eine konstruktiv besonders einfache Ausgestaltung, die eine schnelle und zuverlässige Entsorgung des ausgefilterten Materials ermöglicht, zeichnet sich dadurch aus, dass unterhalb der ersten Unterdruckkammer eine Materialsammeleinheit, insbesondere Auslasstrichtereinheit, für das ausgefilterte Material vorhanden ist, aus dem das gefilterte Material bedarfsweise in anschließbare oder entsprechend anordenbare Behälter, beispielsweise Big Bags, abfüllbar ist.

Um auch beim Entsorgungsvorgang die hohen geforderten Ansprüche hinsichtlich Vermeidung einer Kontaminierung der Umwelt mit Schadstoff belasteten Partikeln zu erfüllen, zeichnet sich eine besonders vorteilhafte Ausgestaltung dadurch aus, dass die Materialsammeleinheit unterseitig eine dichtend öffen- und schließbare Verschlussklappe, insbesondere Jaudklappe, aufweist.

Optimale Filtrationsergebnisse lassen sich gemäß einer bevorzugten Ausgestaltung dadurch umsetzen, dass der Abscheidegrad der ersten und der zweiten Filtereinrichtung über 99 %, insbesondere über 99,9 %, liegt.

Eine konstruktiv besonders vorteilhafte Ausgestaltung, die die Filtrationswirkung insbesondere bezüglich schwergewichtiger Partikel gewährleistet, und dabei den mechanischen Abnutzungsgrad innerhalb des Filtrationsweges der unter hohem Druck angesaugten Partikel der Luftstäube weiter vermindert und dadurch eine dauerhaft zuverlässige Funktion gewährleistet und Wartungs- und Reparaturarbeitsintervallzeiten verlängert, zeichnet sich dadurch aus, dass im Inneren der Gehäuseeinheit unmittelbar im Anschlussbereich des Ansauganschlusses eine Prallplatte angeordnet ist, gegen die die angesaugten Luftstäube beim Eintritt in die erste Unterdruckkammer prallen, wobei die Prallplatte gemäß einem bevorzugten Ausführungsbeispiel aus Gewebegummi besteht.

Eine besonders vorteilhafte Weiterbildung, die den Einsatz vor Ort für das Bedienpersonal vom Aufwand her wesentlich verbessert, zeichnet sich dadurch aus, dass die Filteranlage mobil beziehungsweise verfahrbar ausgebildet ist. Diese Ausgestaltung verbessert die Variabilität hinsichtlich der Entsorgung des filtrierten Materials.

Bezüglich einer einfachen Bedienung bei gleichzeitiger Gewährleistung einer dauerhaft zuverlässigen Funktion zeichnet sich eine besonders bevorzugte Ausgestaltung dadurch aus, dass eine bedienbare Steuereinrichtung vorhanden ist, die mit dem Absaugaggregat und dem Druckluftaggregat in Kommunikationsverbindung steht.

Das erfindungsgemäße Verfahren zur Filtrierung von, insbesondere kontaminierten, Luftstäuben, die Feststoffpartikel und/oder mit, insbesondere Wasser, vernebelte Aerosolpartikel enthalten, welche Partikel insbesondere bei der Beseitigung von asbesthaltigen Belägen durch Fräsmaschinen anfallen, insbesondere unter Einsatz der erfindungsgemäßen Filteranlage zeichnet sich dadurch aus, dass die Luftstäube mittels eines, insbesondere als Turbine, ausgebildeten Absaugaggregats in das Innere einer Gehäuseeinheit einer Filteranlage angesaugt werden, über eine erste Filtereinrichtung geführt werden, deren luftdurchlässige Wandung flüssigkeitsresistent ausgebildet ist, anschließend durch das Ansaugaggregat in ein Kanalsystem gedrückt werden, das Kanalsystem die über das Ansaugaggregat eingedrückte Luft einer zweiten Filtereinrichtung zuführt und die zweite Filtereinrichtung die zugeführte Luft in die Atmosphäre gefiltert abgibt.

Hinsichtlich einer dauerhaft zuverlässigen Funktion und Aufrechterhaltung der Filtrierwirkung zeichnet sich eine besonders vorteilhafte Ausgestaltung des erfindungsgemäßen Verfahrens dadurch aus, dass die Filtereinrichtung durch jeweils in vorgebbaren Zeitintervallen entgegen der Strömungsrichtung in die Filtereinrichtung eingeleitete Druckluft abgereinigt wird.

Um die Geräuschreduzierung im Sanierungsbetrieb zu gewährleisten, zeichnet sich eine vorteilhafte Ausgestaltung des erfindungsgemäßen Verfahrens dadurch aus, dass die von der Turbine in das Kanalsystem gedrückte weiter zu reinigende Luft über eine Schalldämpfereinrichtung geführt wird.

Verfahrensmäßig lassen sich optimale Ergebnisse hinsichtlich der Filtration und damit einer Umweltbelastung dadurch erzielen, dass die Turbine, insbesondere Seitenkanalturbine, in einem Leistungsbereich von 4000 m³/h bis 8000 m³/h bezüglich der abgesaugten Luftmenge und das Druckaggregat, insbesondere der Lamellenverdichter, in einem Arbeitsdruckbereich von 5 bar bis 20 bar arbeitet.

Die erfindungsgemäße Filteranlage und das erfindungsgemäße Verfahren gewährleisten höchste Standards bezüglich der Vermeidung einer möglichen Umweltbelastung bei Sanierungen von kontaminierten Belägen von Böden unter Einsatz einer Fräsmaschine. Unter Gewährleistung dieser strengen Vorgaben ist ein wirtschaftlicher Einsatz ermöglicht, und erfordert einen relativ geringen Aufwand beim Einsatz vor Ort, wobei gleichzeitig eine einfache und zuverlässige Entsorgung des kontaminierten Materials ermöglicht wird. Durch die Hintereinanderschaltung von zwei Filtereinrichtungen, die auf die physikalischen Eigenschaften der zu filtrierenden Medien abgestimmt ist, ist ein optimales Filtrationsergebnis möglich, wodurch eine gesundheitliche Gefährdung der Bedienpersonen durch die beim Fräsvorgang entstehenden gesundheitsgefährlichen Stäube verhindert werden kann.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte Darstellung einer Filteranlage zum Filtrieren von kontaminierten Luftstäuben, die über eine erste Filtereinrichtung mittels eines als Turbine ausgebildeten Absaugaggregats abgesaugt werden und über eine zweite Filtereinrichtung geführt werden,
- Fig. 2: stark schematisierte Darstellung des Anschlusses einer Filteranlage gemäß Fig. 1 an eine Fräsmaschine, die über einen Fräskopf einen asbesthaltigen Belag fräst,
- Fig. 3: stark schematisierte Darstellung eines konstruktiven Ausführungsbeispiels einer Filteranlage gemäß Fig. 1 in Schnittdarstellung,
- Fig. 4: schematischer Querschnitt durch eine Filterpatrone der ersten Filtereinrichtung und
- Fig. 5: Perspektivdarstellung des konstruktiven Ausführungsbeispiels gemäß Fig. 3 einer Filteranlage in einer Außenansicht.

### WEGE ZUM AUSFÜHREN DER ERFINDUNG

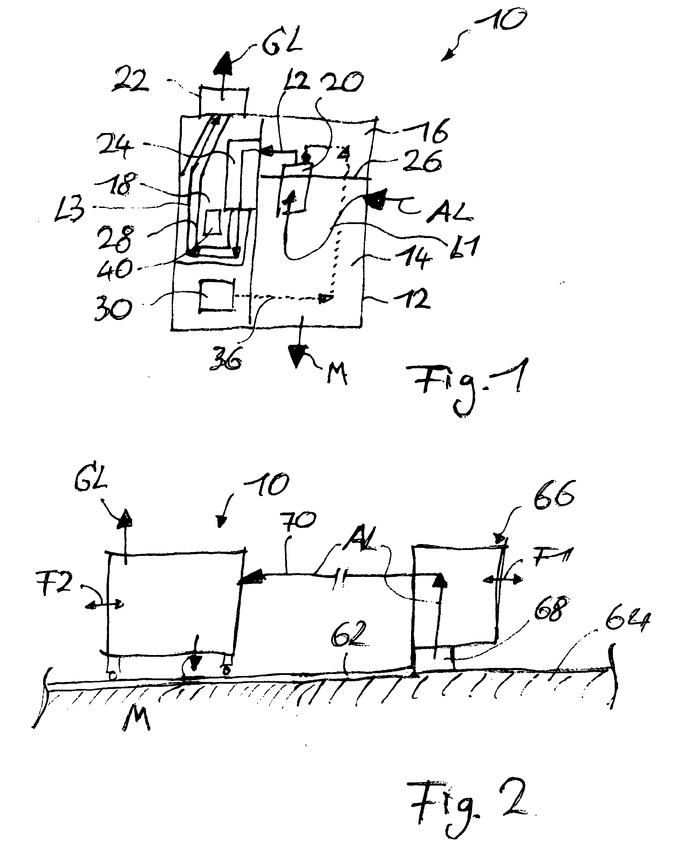

In Fig. 2 ist stark schematisiert der Einsatz einer erfindungsgemäßen Filteranlage 10 beim Abfräsen eines auf einem Boden 64 angeordneten Asbestbelags 62 durch eine Fräsmaschine 66 dargestellt. Die verfahrbare (Pfeil F1) Fräsmaschine 66 weist unterseitig einen Fräskopf 68 auf, der den Asbestbelag 62 abfräst. Bedingt durch den Fräsvorgang werden im Bereich des Fräskopfes 68 Asbestfasern frei gesetzt, die abgesaugt und entsorgt werden müssen. Beim Fräsvorgang wird der Asbestbelagbereich im Bereich des Fräskopfes 68 mit einer Wasserglocke beaufschlagt, um den Asbeststaub und das abgefräste Asbestmaterial zu binden. So entsteht innerhalb des Fräskopfbereiches 68, der nach außen hin abgedichtet ist, eine kontaminierte Luftatmosphäre mit Feststoffpartikeln und Aerosolen. Diese verschmutzte Luft wird über eine flexible Absaugleitung 70 der Filteranlage 10 zugeführt (Pfeil AL), die ebenfalls verfahrbar (Pfeil F2) ausgebildet ist. Innerhalb der Filteranlage 10 wird die verschmutzte Luft über Filtereinrichtungen gereinigt und als gereinigte Luft in die Atmosphäre abgegeben (Pfeil GL). Das innerhalb der Filteranlage 10 ausgefilterte Material M wird bedarfsweise in Behälter abgefüllt, wobei dabei zu beachten ist, dass auch beim Abfüllvorgang keinerlei verschmutztes oder kontaminiertes Material in die Umwelt gelangt.

In Fig. 1 sind stark schematisiert die wesentlichen Bauteile der Filteranlage 10 dargestellt. Die Filteranlage 10 weist eine quaderförmige Gehäuseeinheit 12 auf, innerhalb derer im rechten unteren Bereich eine erste Unterdruckkammer 14 und darüber, getrennt durch eine Filterplatte 26 eine zweite Unterdruckkammer 16 vorhanden ist. Zwischen der ersten Unterdruckkammer 14 und der zweiten Unterdruckkammer 16 ist an einer Ausnehmung der Filterplatte 26 eine erste Filtereinrichtung 20 angeschlossen.

Links neben den beiden Kammern 14, 16 ist ein dritter Gehäusebereich 18 innerhalb der Gehäuseeinheit 12 vorhanden, in dem ein Ansaugaggregat 24 angeordnet, das als Seitenkanalturbine ausgebildet ist, dessen Ansauganschluss über einen Überströmkanal mit der zweiten Unterdruckkammer 16 in Kommunikationsverbindung steht. Am Ausblasausgang des Ansaugaggregats 24 (Turbine) ist ein Kanalsystem 28 angeschlossen, in das die vom Ansaugaggregat 24 angesaugte durch die erste Filtereinrichtung 20 vorgefilterte Luft gedrückt wird und einer oberseitig an der Gehäuseeinheit 12 vorhandenen zweiten Filtereinrichtung 22 zugeführt wird.

Des Weiteren ist innerhalb des dritten Gehäusebereichs 18 ein Druckluftaggregat 30 vorhanden, mit dem über ein Druckluftleitungssystem 36 der Innenraum der Filtereinrichtung 20 bedarfsweise mit Druckluft beaufschlagbar ist.

Schließlich ist noch eine Steuereinrichtung 40 vorhanden, über die die Aktivität des Ansaugaggregats 24 und des Druckluftaggregats 30 steuerbar ist.

Prinzipiell läuft der Filtervorgang wie folgt ab. Durch Einschalten des Ansaugaggregats 24 wird in der zweiten Unterdruckkammer 16 ein Unterdruck und damit auch über die erste Filtereinrichtung 20 ein Unterdruck in der ersten Druckkammer 14 erzeugt. Dadurch wird die verschmutzte Luft AL in der Ansaugleitung 70 angesaugt und gelangt zunächst in das Innere der ersten Unetrdruckkammer 14 (Pfeil L1). Dann wird die verschmutzte Luft AL über die erste Filtereinrichtuung 20 in die zweite Unterdruckkammer 16 angesaugt und gelangt schließlich zum Ansauganschluss des Ansaugaggregats 24 (Pfeil L2).

Das als Seitenkanalturbine ausgebildete Ansaugaggregat 24 drückt dann die durch die erste Filtereinrichtung 20 vorgereinigte Luft in das Kanalsystem 28 (Pfeil L3), so dass diese nachdem sie die zweite Filtereinrichtung 22 passiert hat als gereinigte Luft (Pfeil GL) nach außen in die Atmosphäre tritt.

Nach Ablauf eines vorgegebenen Zeitintervalls veranlasst die Steuereinrichtung 20, dass die vom Druckluftaggregat 30 erzeugte Druckluft impulsartig in das Innere der ersten Filtereinrichtung 20, entgegen der Strömungsrichtung der angesaugten Luft eingeleitet wird, wodurch die Wandung der ersten Filtereinrichtung 20 von anhaftenden Partikeln befreit wird.

Die im Inneren der ersten Unterdruckkammer 14 im Bodenbereich anfallenden aus der verschmutzten Luft herausgefilteren Partikel, das heißt das herausgefilterte Material M, wird bedarfsweise über einen in Fig. 1 nicht näher dargestellten Klappenmechanismus nach außen in beispielsweise Big Bags entsorgt.

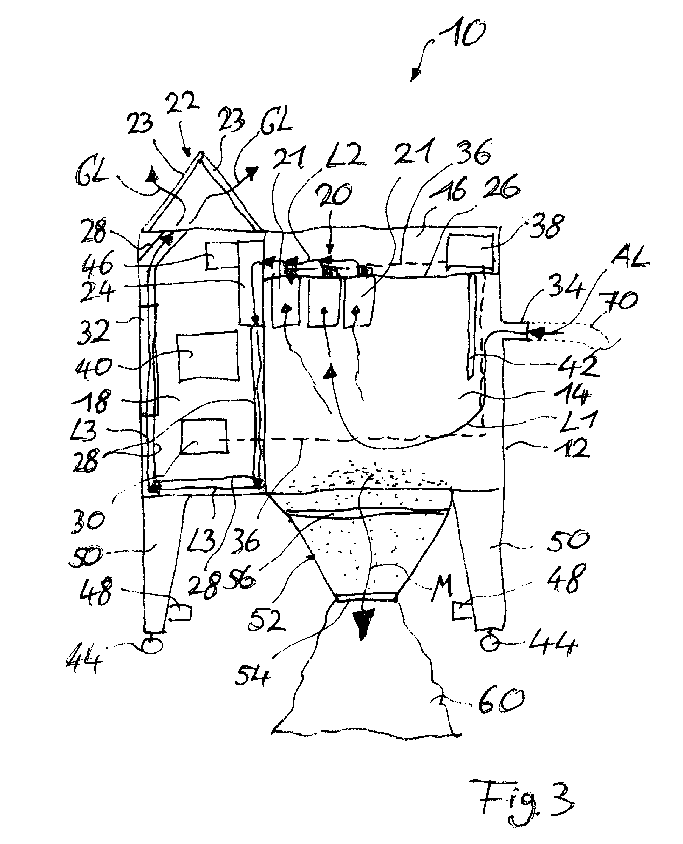

In Fig. 3 ist stark schematisiert ein konstruktives Ausführungsbeispiel der Filteranlage 10 dargestellt, die im Wesentlichen die in Fig. 1 beschriebenen Bauteile enthält, die an dieser Stelle nicht nochmals erläutert werden. Ergänzend ist in Fig. 3 im Bereich der zweiten Unterdruckkammer 16 ein Druckluftspeicher 38 angeordnet, der über das Druckluftleitungssystem 36 mit dem Druckluftaggregat 30 in Verbindung steht und der über ein weiteres Druckluftleitungssystem 36 mit Ventileinheiten 58 kommuniziert, wobei die Ventileinheiten 58 Filterpatronen 21 der ersten Filtereinrichtung 20 zugeordnet sind. Die Ventileinheiten 58 werden von der Steuereinrichtung 40 nach Ablauf eines vorgegebenen Zeitintervalls angesteuert und beaufschlagen das Innere der Filterpatronen 21 impulsartig entgegen der Strömung der angesaugten Luft mit Druckluft zu Abreinigungszwecken.

Zur Geräuschreduzierung ist das Kanalsystem 28 über eine in dem dritten Gehäusebereich 18 vorhandene Schalldämpfereinrichtung 32 geführt.

Die zweite Filtereinrichtung 22 besteht aus zwei zu einer Dreiecksspitze zusammenlaufenden Filtermatten 23.

Die Absaugleitung 70 ist über einen Ansauganschluss 34 an die Gehäuseeinheit 12 angeschlossen. Dabei kann die Gehäuseeinheit 12 mehrere im Durchmesser unterschiedliche verschließbare Ansauganschlüsse 34 zur Erhöhung der Variabilität des Anschlusses möglicher Absaugleitungen aufweisen.

Beabstandet zum Ansauganschluss 34 ist innerhalb der ersten Unterdruckkammer 14 eine Prallplatte 42 angeschlossen, gegen die die angesaugte Luft beim Eintritt in die erste Unterdruckkammer 14 prallt und die bevorzugt aus Gewebegummi besteht.

Unterseitig ist in jedem Eckbereich der Gehäuseeinheit 12 eine Fußeinheit 50 angeordnet, die unterseitig ein Rad 44 aufweist, so dass die Filteranlage 10 insgesamt mobil beziehungsweise verfahrbar ausgebildet ist. Zudem sind im unteren inneren Randbereich der Fußeinheiten 50 jeweils Aufnahmeeinheiten 48 angeschlossen, die zur Aufnahme einer Gabelstaplers ausgebildet sind, so dass die gesamte Filteranlage 10 bedarfsweise von einem Gabelstapler angehoben werden kann.

Die untere Wandung der ersten Unterdruckkammer 14 wird durch eine Materialsammeleinheit 52 gebildet, die als Auslasstrichter ausgebildet ist und über eine in Fig. 3 nicht näher dargestellte Verschlusseinheit 56 mit der Gehäuseeinheit 12 lösbar verbunden ist.

Die untere Stirnseite der Materialsammeleinheit 52 ist mit einer lösbaren Verschlussklappe 54 ausgerüstet, die als sogenannte Jaudklappe ausgebildet ist und ein problemloses Abfüllen eines angeschlossenen Behälters, beispielsweise Big Bags 60, ermöglicht ohne das kontaminiertes gefiltertes Material in die Umwelt gelangt.

Im konkreten Ausführungsbeispiel gestaltet sich der Ablauf der Vorgänge innerhalb der Filteranlage 10 wie folgt:
Nach dem Aktivieren des Ansaugaggregats 24 (Seitenkanalturbine) werden die asbesthaltigen Stäube und/oder die mit Wasser vernebelten Aerosole über die Absaugleitung 70 in das Innere der ersten Unterdruckkammer 14 abgesaugt. Die als Vorfilter ausgebildete erste Filtereinrichtung 20 besteht im Ausführungsbeispiel aus acht einzelnen Filterpatronen 21, deren Filterwandungsstuktur kunststoffbeschichtet ausgebildet ist, beispielsweise mit PTFE, so dass die Filterwandung auch bei Filterung von Aerosolen beständig ihre Filterfunktion gewährleisten kann und keinen Schaden nimmt. Die Filterpatronen sind dabei so ausgebildet, dass sie einen Abscheidegrad von zumindest 99,5 % gewährleisten. Dabei kommen im Ausführungsbeispiel Filterpatronen in der Ausführung F9 gemäß DIN EN 60335-2-69 Annexx AA zum Einsatz.

Die beiden Filtermatten 23 der als Ausgangsfilter ausgebildeten Filtereinrichtung 22 entsprechen der Filterklasse H14 gemäß DIN EN 1822 und weisen einen Abscheidegrad von mindestens 99,99 % auf.

Die Filterpatronen 21 werden in einem Zyklus von beispielsweise 20 Sekunden mit von dem Druckluftaggregat 30 erzeugten Druckluft entgegen der Strömungsfilterrichtung beaufschlagt, so dass die Luftgängigkeit der Filterpatronen 21 dauerhaft gewährleistet ist.

Das Ansaugaggregat 24 (Turbine) arbeitet bevorzugt mit einer Leistung von 4500 m³/h. Wie erwähnt, wird die Abreinigungsdruckluft zyklisch gesteuert, wobei pro Filterpatrone 21 ein pneumatisches Pilotventil 58 vorhanden ist, dass über den Druckluftspeicher 38 mit beispielsweise 10 bar gespeist wird. Die Steuerung der Abreinigungsluft kann über eine elektronische Impulssteuerung erfolgen oder variabel (zeitabhängig) einstellbar sein. Als Druckluftaggregat 30 wird bevorzugt ein integrierter Lamellenverdichter eingesetzt, der druckabhängig (maximal 11 bar) geschaltet wird.

Die unterhalb der Gehäuseeinheit 52 angeordnete Materialsammeleinheit ist über Verschlusseinheiten 56, beispielsweise Schnappverschlüsse, an der Gehäuseeinheit 12 gesichert. Die Materialsammeleinheit 52 weist in ihrem Bodenbereich eine Jaudklappe auf. Durch diese Materialsammeleinheit 52 werden die asbesthaltigen ausgefilterten Materialien in sogenannte Big Bags 60 abgefüllt, ohne das eine Gefährdungspotenzial (Austritt von Phasern oder belasteten Materialien) eintritt. Dazu wird die Filteranlage 10 mittels eines Gabelstaplers oder sonstiger Hebevorrichtungen angehoben und der Big Bag 60 an der Materialsammeleinheit 52 über die Jaudklappe (Verschlussklappe 54) angeschlossen. Nach dem Abfüllvorgang wird die Jaudklappe 54 geschlossen. Anschließend wird die Big Bag 60 von der Materialsammeleinheit 52 gelöst und verschlossen. Bei nicht kontaminierten Material ist es auch möglich, das Material direkt in eine untergefahrene Schubkarre oder sonstige fahrbare Ladeeinheit zu füllen.

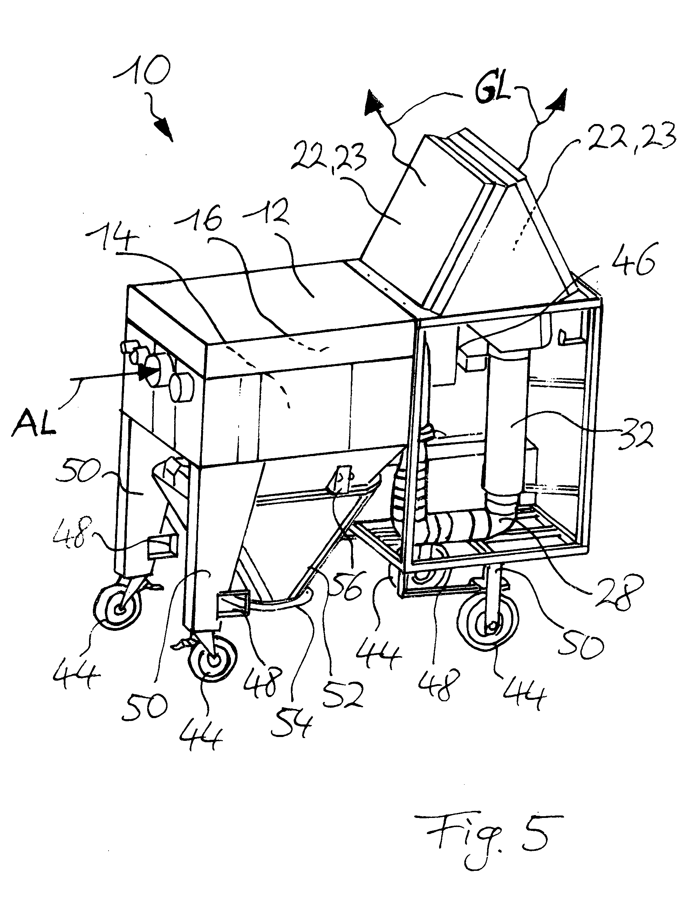

Fig. 5 zeigt eine konstruktive Ausbildung der Filteranlage 10 gemäß Fig. 3 in einer perspektivischen Außenansicht. Gleiche Bauteile tragen dasselbe Bezugszeichen und werden nichtt nochmals erläutert.

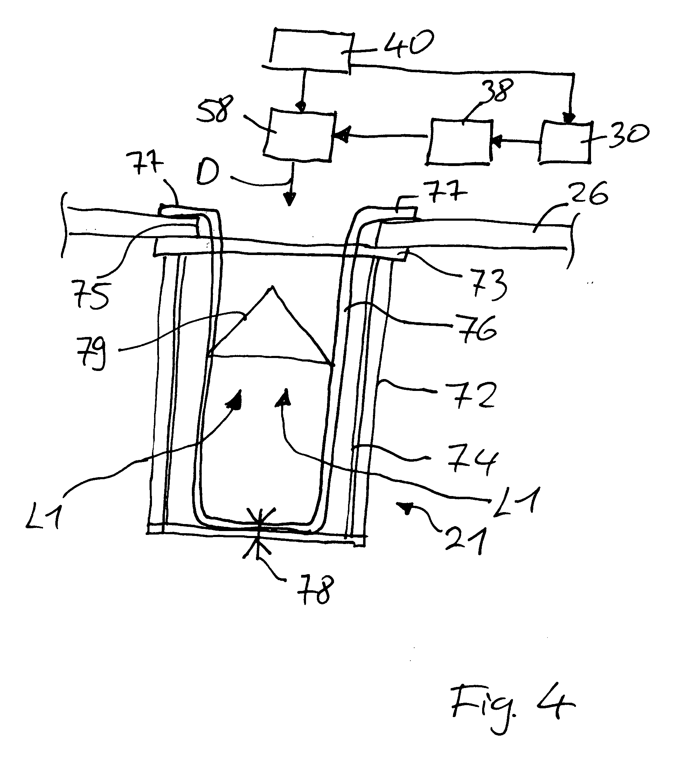

In Fig. 4 ist stark schematisiert ein Querschnitt einer an die Filterplatte 26 angeschlossene Filterpatrone 21 dargestellt. Die Filterplatte 26 weist eine Ausnehmung 75 auf. Unterhalb der Ausnehmung 75 ist die Filterpatrone 21 mit ihrem oberseitigen Dichtflansch 23 an die Unterseite der Filterplatte 26 dichtend angeschlossen. Die mit Kunststoff beschichtete Filterwandung 72 wird durch einen innenseitig angeordneten Stützkorb 74 gestützt.

Der Anschluss der Filterpatrone 21 an die Filterplatte 26 erfolgt über einen U-förmigen Bügel 76, dessen oberseitige freie Schenkel eine nach außen weisende Krageinheit 77 aufweisen, die oberseitig an der Filterplatte 26 aufliegen. Der Stegbereich des Bügels 76 ist über eine Schraube 78 mit dem Boden der Filterpatrone 21 verschraubt, wodurch eine Verspannung der Filterpatrone 26 über deren Dichtflansch 73 mit der Filterplatte 26 erfolgt. Sowohl der Bügel 76 als auch die Schraube 78 sind bevorzugt aus V2A-Stahl. Innerhalb des Bügels 76 ist im oberen Drittelbereich eine nach oben sich verjüngende Kegelleiteinheit 79 angeordnet, die zyklisch eingeblasene Druckluft (D) zur Filterwandung 72 hin umleitet.

## Patentansprüche

1. Filteranlage (10) zur Filtrierung von, insbesondere kontaminierten, Luftstäuben, die Feststoffpartikel und/oder mit, insbesondere Wasser, vernebelte Aerosolpartikel enthalten, welche Partikel insbesondere beim Abfräsen von asbesthaltigen Belägen durch Fräsmaschinen anfallen, mit
- einer Gehäuseeinheit (12) mit zumindest einem Ansauganschluss (34) zum Anschluss einer zu einer Fräsmaschine führenden Absaugleitung,
- einem Ansaugaggregat (14) zum Ansaugen der Luftstäube in das Innere der Gehäuseeinheit (12), und
- einer innerhalb der Gehäuseeinheit (12) angeordneten ersten Filtereinrichtung (20), über/durch die die Luftstäube zum Abscheiden der Partikel geleitet werden,
- **dadurch gekennzeichnet, dass**
- eine erste und zweite durch eine Filterplatte (20), an der in entsprechenden Ausnehmungen die erste Filtereinrichtung (20) angeordnet ist, getrennte Unterdruckkammern (14, 16) vorhanden sind,
- das Ansaugaggregat (24) mit der zweiten Unterdruckkammer (16) in Kommunikationsverbindung steht und dadurch die Absaugluft über die erste Unterdruckkammer (14) über die Filtereinrichtung (22) und die zweite Unterdruckkammer (16) ansaugt,
- ein Kanalsystem (28) vorhanden ist, das an das Absaugaggregat (24) angeschlossen ist und in das die vom Absaugaggregat (24) angesaugte, durch die erste Filtereinrichtung (20) gefilterte Abluft anschließend gedrückt wird, und
- eine zweite Filtereinrichtung (22) vorhanden ist, die an das Kanalsystem (28) angeschlossen ist und die zugeführte Abluft nach außen nochmals gefiltert abgibt.

2. Filteranlage nach Anspruch 1,
- **dadurch gekennzeichnet, dass**
- das Ansaugaggregat (24) als Turbine, insbesondere Seitenkanalturbine, ausgebildet ist, die die Absaugluft über die erste und zweite Unterdruckkammer (14, 16) über die erste Filtereinrichtung (20) ansaugt und in das Kanalsystem (28) zur Ausleitung über die zweite Filtereinrichtung (22) drückt.

3. Filteranlage nach Anspruch 2,
- **dadurch gekennzeichnet, dass**
- der Leistungsbereich der Turbine im Bereich zwischen 4000 m³/h bis 8000 m³/h, insbesondere bei circa 4500 m³/h, liegt.

4. Filteranlage nach einem oder mehreren der vorstehenden Ansprüche,
- **dadurch gekennzeichnet, dass**
- die erste Filtereinrichtung (20) zumindest eine oder mehrere Filterpatronen (21) aufweist, deren luftdurchlässige Wandung flüssigkeitsresistent ausgebildet ist.

5. Filteranlage nach Anspruch 4,
- **dadurch gekennzeichnet, dass**
- die erste Filtereinrichtung (20) beziehungsweise die Filterpatrone (22) eine kunststoffbeschichtete Wandung, insbesondere mit PTFE beschichtete Wandung, aufweist.

6. Filteranlage nach einem oder mehreren der vorstehenden Ansprüche,
- **dadurch gekennzeichnet, dass**
- ein Druckluftaggregat (30) mit einem Druckluftleitungssystem (36) vorhanden ist, mittels dem die erste Filtereinrichtung (20) beziehungsweise deren Filterpatronen (21) durch Beaufschlagung mit Druckluft entgegen der Durchströmrichtung der Abluft nach jeweils vorgebbaren Zeitintervallen impulsartig abgereinigt wird.

7. Filteranlage nach Anspruch 6,
- **dadurch gekennzeichnet, dass**
- das Druckluftaggregat (30) als Lamellenverdichter ausgebildet ist.

8. Filteranlage nach Anspruch 6 oder 7,
- **dadurch gekennzeichnet, dass**
- der Arbeitsdruck des Druckaggregats (30) im Bereich zwischen 5 bis 20 bar, insbesondere bei 10 bar, liegt.

9. Filteranlage nach einem oder mehreren der vorstehenden Ansprüche
- **dadurch gekennzeichnet, dass**
- innerhalb des Kanalsystems (28) zwischen dem Ansaugaggregat (24) und der zweiten Filtereinrichtung (22) eine Schalldämpfereinrichtung (32) vorhanden ist.

10. Filteranlage nach einem oder mehreren der vorstehenden Ansprüche
- **dadurch gekennzeichnet, dass**
- die zweite Filtereinrichtung (22) zumindest eine flächige Filtermatte (23) aufweist.

11. Filteranlage nach einem oder mehreren der vorstehenden Ansprüche
- **dadurch gekennzeichnet, dass**
- unterhalb der ersten Unterdruckkammer (14) eine Materialsammeleinheit (52), insbesondere Auslasstrichtereinheit, für das ausgefilterte Material (M) vorhanden ist, aus dem das gefilterte Material bedarfsweise in anschließbare oder entsprechend anordenbare Behälter abfüllbar ist.

12. Filteranlage nach Anspruch 11,
- **dadurch gekennzeichnet, dass**
- die Materialsammeleinheit (52) unterseitig eine dichtend öffen- und schließbare Verschlussklappe (54), insbesondere Jaudklappe, aufweist.

13. Filteranlage nach einem oder mehreren der vorstehenden Ansprüche
- **dadurch gekennzeichnet, dass**
- der Abscheidegrad der ersten und der zweiten Filtereinrichtung (20, 22) über 99 %, insbesondere über 99,9 %, liegt.

14. Filteranlage nach einem oder mehreren der vorstehenden Ansprüche
- **dadurch gekennzeichnet, dass**
- im Inneren der Gehäuseeinheit (12) unmittelbar im Anschlussbereich des Ansauganschlusses (34) eine Prallplatte (42) angeordnet ist, gegen die die angesaugten Luftstäube beim Eintritt in die erste Unterdruckkammer (14) prallen.

15. Filteranlage nach einem oder mehreren der vorstehenden Ansprüche
- **dadurch gekennzeichnet, dass**
- die Filteranlage mobil beziehungsweise verfahrbar ausgebildet ist.

16. Filteranlage nach einem oder mehreren der vorstehenden Ansprüche
- **dadurch gekennzeichnet, dass**
- eine bedienbare Steuereinrichtung (40) vorhanden ist, die mit dem Absaugaggregat (24) und dem Druckluftaggregat (30) in Kommunikationsverbindung steht.

17. Verfahren zur Filtrierung von, insbesondere kontaminierten, Luftstäuben, die Feststoffpartikel und/oder mit, insbesondere Wasser, vernebelte Aerosolpartikel enthalten, welche Partikel insbesondere bei der Beseitigung von asbesthaltigen Belägen durch Fräsmaschinen anfallen, insbesondere unter Einsatz einer Filteranlage nach einem oder mehreren der vorstehenden Ansprüche,
- **dadurch gekennzeichnet, dass**
- die Luftstäube mittels eines, insbesondere als Turbine, ausgebildeten Absaugaggregats in das Innere einer Gehäuseeinheit (12) einer Filteranlage (10) angesaugt werden, über eine erste Filtereinrichtung (20) geführt werden, deren luftdurchlässige Wandung flüssigkeitsresistent ausgebildet ist,
- anschließend durch das Ansaugaggregat (24) in ein Kanalsystem (28) gedrückt werden,
- das Kanalsystem (28) die über das Ansaugaggregat (24) eingedrückte Luft einer zweiten Filtereinrichtung (22) zuführt und
- die zweite Filtereinrichtung (22) die zugeführte Luft in die Atmosphäre gefiltert abgibt.

18. Verfahren nach Anspruch 17,
- **dadurch gekennzeichnet, dass**
- die Filtereinrichtung durch jeweils in vorgebbaren Zeitintervallen entgegen der Strömungsrichtung impulsartig eingeleitete Druckluft abgereinigt wird.

19. Verfahren nach Anspruch 17 oder 18,
- **dadurch gekennzeichnet, dass**
- die durch das Kanalsystem (28) gedrückte Luft über eine Schalldämpfereinrichtung (32) geführt wird.

20. Verfahren nach einem oder mehreren der Ansprüche 17 bis 19,
- **dadurch gekennzeichnet, dass**
- das gefilterte Material jeweils nach Ablauf eines vorgegebenen Zeitintervalls in Behälter abgefüllt und anschließend entsorgt wird.
